# EUROPEAN PATENT SPECIFICATION

(11) **EP 3 925 731 B1**
(45) Date of publication and mention of the grant of the patent: **29.11.2023**
(21) Application number: 21180363.0
(22) Date of filing: 18.06.2021
(51) Int. Cl.: B23Q 11/08

(54) **A PROTECTIVE COVERING DEVICE FOR MACHINERY OR APPARATUSES**
SCHÜTZENDE ABDECKUNG FÜR MASCHINEN ODER APPARATE
HOUSSE DE PROTECTION POUR MACHINES OU APPAREILS

(30) Priority: 19.06.2020 IT 202000014719
(43) Date of publication of application: 22.12.2021
(73) Proprietor: Tecnimetal International S.r.L., 26037 San Giovanni In Croce (Cremona) (IT)
(72) Inventor: BORRINI, Matteo, 26037 San Giovanni in Croce (CR) (IT)
(74) Representative: Fanzini, Valeriano

(56) References cited:
- EP-A1- 1 382 416
- EP-A1- 3 175 951

## Description

The present invention is part of the field of the covering devices for the protection of machinery and apparatuses.

In particular, the invention relates to a protective covering device for working parts of automatic machines, in particular machine tools, but can advantageously be applied to different industrial sectors.

For example, in the machine tool sector, the machine components require effective protection from external elements and machining waste produced by said machine tools during their operation.

In fact, the need to achieve ever-increasing working precision and to maintain this characteristic over a long time, requires machine tool manufacturers to use guards, particularly for screws, guides and pallets.

It is well known in the operation of machine tools, such as grinding machines, lathes, etc., that solid scrap materials are produced, such as chips and/or particles and/or dust removed from corresponding tools (millers, abrasive discs, etc.). The scrap material is typically mixed with liquids coming directly from the processing, such as cooling and/or lubrication liquids/oils.

Said protective covering device protects the machine from chips, dust, process waste, dirt, coolants, emulsions, accidental impacts from tools or utensils, etc.

As is well known, the working tool of the machine tool includes a body that is generally movable in a straight line in a generally vertical direction with alternating forward and reverse movements.

Similarly, the covering device is designed to follow said movements of the tool body so as to cover and protect the part of the machine from which said tool projects.

The Italian utility model no. 247452, in which a covering and protective device is described that can be associated with a working member of a machine tool is known. The working member is movable linearly and bidirectionally along a rectilinear direction, and the covering and protective device is adapted to follow the movements of the working member while keeping a corresponding area of the machine covered and protected from which the aforementioned member protrudes cantilevered. The covering and protective device comprises a plurality of covering panels, arranged overlapped between them, of which a first panel can be fixed to the machine at the area to be protected, while the remaining panels are movable slidably the one with respect to the other and with respect to the first panel according to the direction of motion of the working member. Each panel comprises a longitudinally opposite and coplanar first and second flap. The respective panels are mounted in creeping contact the one with respect to the other, and the set of the first flaps and the set of the second flaps respectively define a first and a second portion of a covering wall. More precisely, the first and the second flaps are arranged on opposite sides of the working member along the direction of motion and are partially overlapped between them.

In particular, the flaps of the first portion are overlapped between them according to one direction and the flaps of the second portion are overlapped between them in the opposite direction. In other
words, the overlapping configuration of the flaps is symmetrical with respect to the working member. The vertical, or substantially vertical, arrangement and movement of the covering and protective device means that a series of mutually overlapped
flaps are arranged such that liquids, chips, dust or other machining residues can properly flow from each flap to the adjacent and underlying flap, while the other series of mutually overlapped flaps are arranged such as to
allow liquids, chips, dust, or other machining residues to wedge undesirably between each flap and the adjacent and underlying one.

Protective covering devices such as the one described in patent EP1382416 are known to solve this problem. Said device comprises a plurality of covering elements slidably coupled between them and comprising a first covering element attached to the machine in an area to be protected and a plurality of movable covering elements moving the one with respect to the other and with respect to the first covering element along the defined path. Said covering elements define a first and second portion of a covering wall, which are complementary, being positioned on the opposite sides of the tool.

In both the first and the second portion of the covering wall, each cross section of each covering element comprises a section overlapping the next section, in one direction only along the defined path, so that all the sections of the covering wall are directed in the same direction.

That is, on both sides of the tool, the sections are all overlapped, for example, from top to bottom, which is important to ensure that machining waste does not tend to enter between one section and another. In particular, as the tool moves vertically, or substantially vertically, the overlapping of the sections must be such that they are all arranged such that all the topmost sections overlap the bottommost ones on both sides of the tool and not vice versa.

In the cited document, this happens by means of second transverse portions parallel to the respective transverse portions to which they are associated through connecting walls that are transverse to the path and perpendicular to the two transverse portions.

Said respective second transverse portion, the first transverse portion and the connecting wall form a U-shaped box-like element.

This solution is particularly complex as a portion of the covering wall requires doubling the sections to create a U-shaped box.

Said solution is also difficult to dismantle once installed.

### EXPOSURE AND ADVANTAGES OF THE INVENTION

The technical problem underlying the present invention is that of making available to the art a protective covering device for machinery or apparatuses structurally and functionally conceived to overcome one or more of the limits set out above with reference to the cited prior art.

In the context of the aforesaid problem, a main object of the invention is to develop a protective covering device for machinery and apparatuses which allows the overlapping of the covering panels all in the same direction, by means of a solution which is simple to make and install and which can be easily dismantled.

A further object of the invention is that of making available to the art a protective covering device for machinery and apparatuses in the context of a rational and rather low cost solution.

Such and other objects are achieved by virtue of the features of the invention reported in independent claim 1. The dependent claims outline preferred and/or particularly advantageous aspects of the invention.

In particular, an embodiment of the present invention makes available a protective covering device for machinery or apparatuses where a working element is movable along a translation direction.

The device comprises a covering wall in which a first portion and a corresponding second portion of said covering wall are separated from each other by the working element, said first portion comprising a plurality of first covering panels and said second portion comprising a plurality of second covering panels.

Said first and second panels are mechanically connected to each other by means of a frame which defines a movable covering element.

Preferably, each movable covering element elongates according to the translation direction, increasing in length with respect to each other, from the smallest to the largest.

In particular, said movable covering elements are configured to translate along the translation direction the one with respect to the other, such that the first panel of each movable covering element slidably overlaps partially the first panel of the shorter movable covering element adjacent thereto, and the second panel of each movable covering element slidably overlaps partially the second panel of the longer movable covering element adjacent thereto.

According to one aspect of the invention, the covering device provides that each movable frame comprises a pair of profiles that are opposite and having a decreasing size section such that the profile section of each movable covering element can be slidably fitted into the corresponding profile section of the adjacent longer movable covering element and the latter is configured to slidably receive the corresponding profile section of the adjacent shorter movable covering element 2. Additionally, all the first panels are arranged close to the outer edge of the respective profile, while the second panels are arranged close to the inner edge of the respective profile.

Thanks to this solution, an overlapping of the panels all in the same direction both above and below the working element is easily obtained.

According to a preferred embodiment, the rear face of the first panel of each movable covering element slidably overlaps partially the front face of the first panel of the adjacent shorter movable covering element, and the rear face of the second panel of each movable covering element slidably overlaps partially the front face of the second panel of the longer movable covering element adjacent thereto.

In a preferred embodiment, the frame is arranged along the translation direction, such as to have a first end on a side of the working element, and a second opposite end on the opposite side; said first panel and second panel in connection with the respective frame define therebetween an opening through which the working element protrudes outwardly.

In this way, the protection on both sides of the working element is achieved with a single frame.

A preferred embodiment provides for the first panel to be placed at the first end of the frame and the second panel to be placed at the second end of the frame.

Preferably the profile of the longer frame has a section with a height greater than the sum of the thicknesses of all the first and second panels that make up the covering wall.

Thanks to this solution, the insertion and the guided sliding of each movable covering element into the adjacent one are possible.

In a preferred embodiment, the two profiles have a U-shaped section and are arranged such that the opened portion of the U-shaped section of the profile is in front of that of the opposite profile, namely said U-shaped sections directed towards the inside of the movable frame.

Thanks to said U-shaped section, no further guide elements are necessary to allow the correct translation of all the movable covering elements.

Preferably, the first panel joins the two profiles at the outer wings of the U-shaped section directed towards the outer surface, and the second panel joins the two profiles at the inner wings of the U-shaped section directed towards the inner surface.

This conformation of the movable covering element makes the solution simple to manufacture and capable of allowing panels to overlap all in the same direction.

In particular, the first panel is positioned as an extension of the outer wings of the U-shaped section of the opposite profiles and the second panel is positioned as an extension of the inner wings of the U-shaped section of the opposite profiles, said first and second panel preferably welded to said outer/inner wings.

This aspect further simplifies the manufacture and assembly of the movable covering element.

According to one aspect of the invention, the device comprises a first covering element that can be fixed to the machine or apparatus in the area to be protected in relation to which the movable covering elements translate along the translation direction.

In particular, said first covering element can be fixed to the machine or apparatus in the area to be protected and comprises a first frame, a first end panel and a second end panel; preferably the rear face of the first end panel overlaps partially the front face of the first panel of the adjacent longer frame and the rear face of the second panel of the longer frame slidably overlaps partially the adjacent front face of the second end panel.

Preferably the frames have a decreasing length from the movable covering element adjacent to said first covering element.

A preferred embodiment provides that each first panel comprises a first engagement element and/or the second panel comprises a second engagement element that extends from the inner surface, towards the area to be protected, adapted to contact, while translating along the translation direction, the corresponding first and/or second engagement elements of the adjacent movable covering elements, for dragging them to a stop position wherein all the first engagement elements or the second engagement elements are all in contact with each other.

Thanks to this solution, the movement of the movable covering elements takes place in sequence from the smallest to the largest in a simple and low-cost way.

Said objects and advantages are all achieved by the protective covering device for machinery or apparatuses, object of the present invention, which is characterised by what is provided in the claims below.

### BRIEF DESCRIPTION OF THE DRAWINGS

This and other features will be more apparent from the following description of some of the embodiments, illustrated purely by way of non-limiting example in the accompanying drawings.
- Figure 1: illustrates an axonometric view from above and below of a protective covering device;

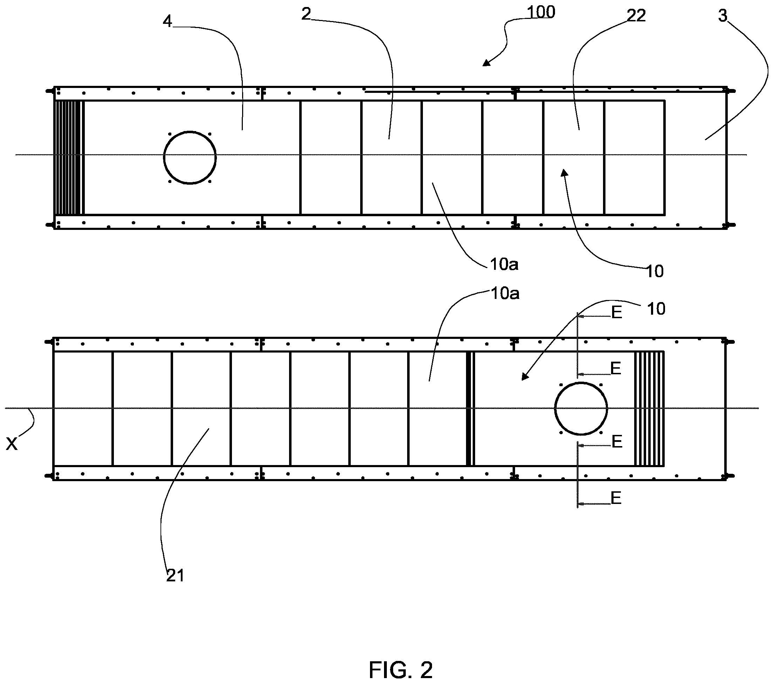

- Figure 2: illustrates a plan view of a protective covering device in the two extreme positions of its stroke;

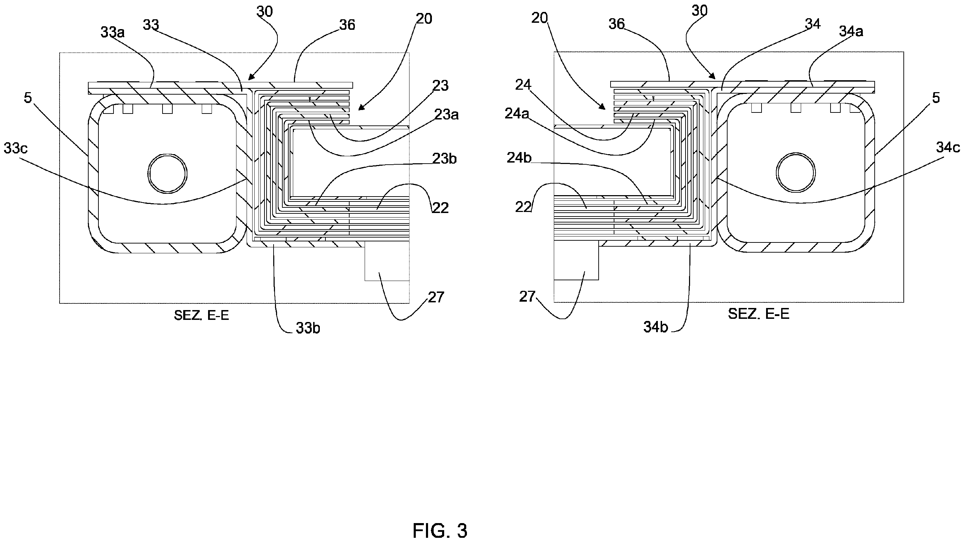

- Figure 3: illustrates a front section view of a detail of the protective covering device;

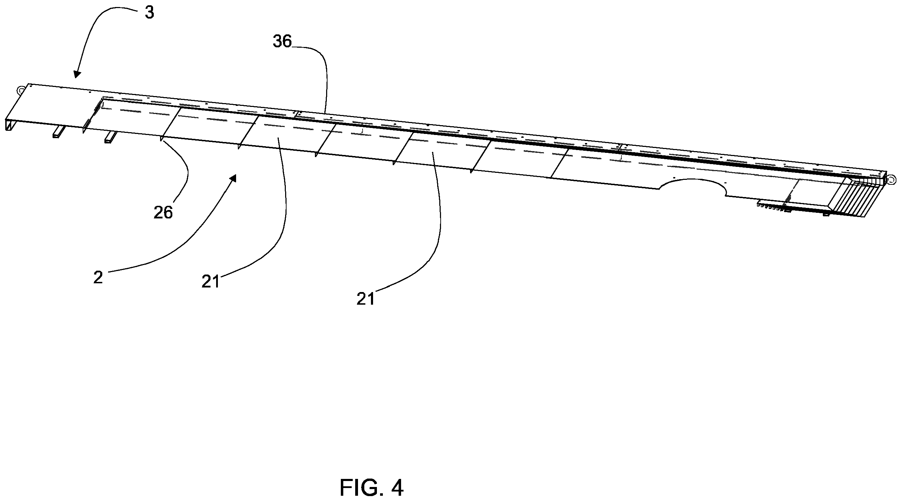

- Figure 4: illustrates a side section view of a protective covering device;
- Figure 5: illustrates an axonometric view from below of a protective covering device with engagement elements;

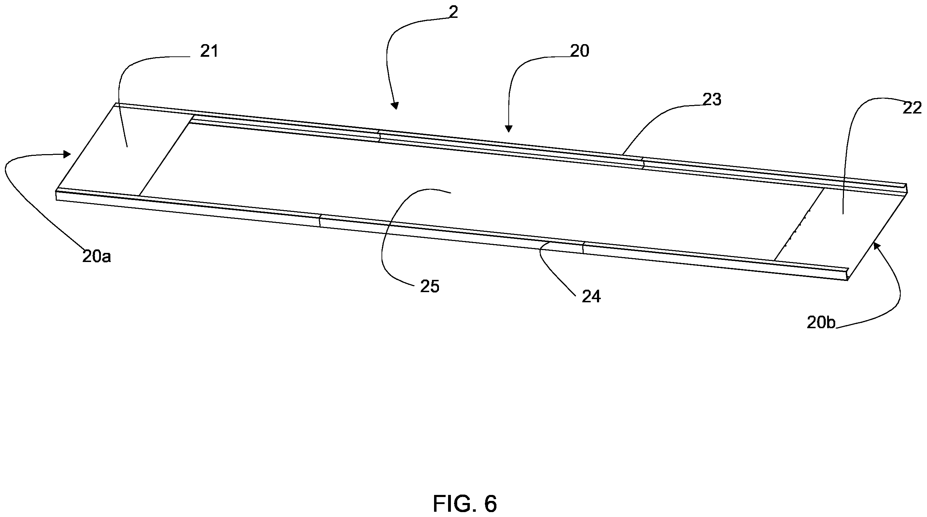

- Figure 6: illustrates an axonometric view of a movable covering element of the protective device;
- Figure 7: illustrates a view from above of the first covering element of the protective covering device;
- Figure 8: illustrates a frontal section view and relative detail of the first covering element of the protective covering device;
- Figure 9: illustrates an axonometric view of the assembly of the movable covering elements on the first covering element.

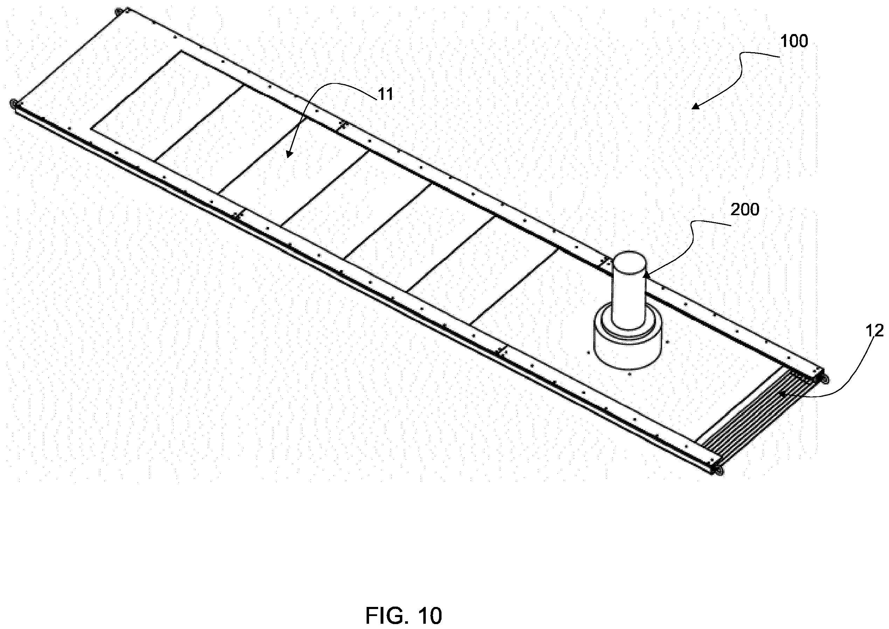

- Figure 10: illustrates an axonometric view from above of a protective covering device with a visible working element.

### DESCRIPTION OF THE INVENTION

With particular reference to the figures, a protective covering device for machinery or plants is indicated by the reference number 100.

The device 100 is associated with a member, or tool, or working element 200 of, for example, a machine tool, for which a protection of the component parts from liquids, chips, dust, or other machining residues is made necessary.

In the following reference will be often made, but without thereby limiting the scope of the invention, to the machine tool sector, wherein the machine components require an effective protection from chips, dust and other process waste.

The working element 200 is movable according to a translation direction X. For example, as will often be described below, the working element 200 is movable according to the translation direction X in both forward and reverse directions, along a straight, generally vertical or substantially vertical path.

Said protective covering device 100 is movable along the translation direction X together with the working element 200.

The working element 200 protrudes from the machine outwardly.

The device 100 preferably comprises a covering wall 10 having its outer surface 10a, from which the working element 200 protrudes outwardly, and an inner surface 10b, which faces onto the area to be protected. Said area to be protected comprises guides, transmissions, etc., which are located at the base of the working element 200.

Said covering wall 10 comprises a first and a corresponding second portion 11, 12 which are separated from each other by the working element 200.

Thus, the first portion 11 is above and the second portion 12 is below the working element 200, movable in vertical direction.

Said first portion 11 comprises a plurality of first covering panels 21 and said second portion 12 comprises a plurality of second covering panels 22. Each first panel 21 is mechanically connected to the respective second panel 22 by means of a frame 20. Said frame 20 together with the first panel 21 and the second panel 22 defines what is called a movable covering element 2.

Therefore, the first covering panel 21 being positioned on one side of the working element 200 and the second covering panel 22 being positioned on the opposite side of the working element 200, the frame 20 connecting the first panel 21 and the second panel 22, is preferably arranged along the translation direction X, such as to have a first end 20a on one side of the working element 200, for example above, and a second opposite end 20b on the opposite side, for example below.

In this way, the first panel 21 and the second panel 22 on each frame 20 define therebetween an opening 25 through which the working element 200 protrudes outwardly.

Therefore each movable covering element 2 elongates according to the translation direction X.

According to one aspect of the invention, the device 100 comprises, in addition to the movable covering elements 2, also a first covering element 3 that can be fixed to the machine or apparatus in the area to be protected.

This covering element 3 extends along the translation direction X and is fixed.

One embodiment provides that the covering wall 10 comprises, in addition to the plurality of first covering panels 21 and to the plurality of second covering panels 22, also a first end panel 31 and a second end panel 32 of the first covering element 3.

Said first covering element 3 that can be fixed to the machine or apparatus in the area to be protected, preferably comprises a first frame 30, which mechanically connects the first end panel 31 and the second end panel 32.

Like for the frames 20, the first frame 30 is also preferably arranged along the translation direction X, such as to have a first end 30a on one side of the working element 200, and a second opposite end 30b on the opposite side, for example above and below the vertically moving working element 200, respectively.

Preferably, the first end panel 31 is placed at a first end of the frame 30 and the second end panel 32 is placed at a second end of the frame 30 such that they define therebetween a first opening 35 through which the working element 200 protrudes outwardly.

Said first end panel 31 and second end panel 32 have a front face 31a, 32a directed to the outside, i.e. towards the working element 200 and a rear face 31b, 32b, directed to the inside, i.e. towards the area to be protected.

A preferred embodiment provides that the movable covering elements 2 have different sizes from each other, increasing in length with respect to each other, from the smallest to the largest.

In particular, one possible embodiment provides that the frames 20 have a decreasing length from the movable covering element 2 adjacent to the first covering element 3.

Therefore, the openings 25 are also all shorter in length than the first opening 35 and preferably decrease in proportion to the length of the frame 20.

Further, said movable covering elements 2 are configured to translate along the translation direction X the one with respect to the other.

Said movable covering elements 2 therefore translates along the translation direction X also with respect to the first covering element 3, which remains in a fixed position.

As the working element 200 moves along its working path, along the translation direction X, the panels 21, 22 in the different working positions cover corresponding rectangular portions of the area defined by the first opening 35 of the first covering element 3.

In particular, the translation of the movable covering elements 2 and consequently of the covering wall 10 takes place as follows:
the first panel 21 of each movable covering element 2 slidably overlaps partially the first panel 21 of the adjacent shorter movable covering element 2;
the second panel 22 of each movable covering element 2 slidably overlaps partially the second panel 22 of the longer movable covering element 2 adjacent thereto.

Preferably:
the rear face 21b of the first panel 21 of each movable covering element 2 slidably overlaps partially the front face 21a of the first panel 21 of the adjacent shorter movable covering element 2;
the rear face 22b of the second panel 22 of each movable covering element 2 slidably overlaps partially the front face 22a of the second panel 22 of the longer movable covering element 2 adjacent thereto.

Further, the first end panel 31 overlaps partially the first panel 21 of the adjacent longer frame 20; the second panel 22 of the longer frame 20 slidably overlaps partially the second end panel 32.

In particular, the rear face 31b of the first end panel 31 overlaps partially the front face 21a of the first panel 21 of the adjacent longer frame 20; the rear face 22b of the second panel 22 of the longer frame 20 slidably overlaps partially the adjacent front face 32a of the second end panel 32.

Advantageously, said panels 21, 22, 31, 32 are preferably flat elements of low thickness, for example made of sheet metal, which overlap each other like tiles preferably in a creeping manner on one another.

The position of the panels 21, 22, 31, 32 and the relative sliding, as described above, makes it possible to realise a covering wall 10 in which all said panels overlap in the same direction, both in the first portion 11 and in the second portion 12 of the covering wall 10. Therefore, since the working element 200 is arranged such that it generally works in a vertical direction, all the first covering panels 21, which are located above the working element 200, will be overlapped such that the topmost panel 21 always at least overlap partially the one located in the adjacent bottommost position; the same identical overlapping is found below the working element 200 for the second covering panels 22.

This ensures that machining waste and/or the lubricating liquids, etc., flow over the panels 21, 22, 31, 32 without entering between the one and the other, as visible in the figures.

An object of the invention is the fact that said device 100 provides for each movable frame 20 to be shaped in a simple and effective way to obtain the above-described overlapping of the panels 21, 22, 31, 32.

In particular, the frame 20 comprises a pair of opposite profiles 23, 24.

Said profiles 23, 24 preferably have a decreasing size section, from the longest to the shortest.

Thus, the profile section 23, 24 of each movable covering element 2 can be slidably fitted into the corresponding profile section 23, 24 of the adjacent longer movable covering element 2 and the latter in turn is configured to slidably receive the corresponding profile section 23, 24 of the adjacent shorter movable covering element 2.

A preferred embodiment provides that all first panels 21 are arranged close to the outer edge 23a, 24a of the respective profile 23, 24, while the second panels 22 are arranged close to the inner edge 23b, 24b of the respective profile 23, 24.

Inner edge 23b, 24b means the edge of the profile closest to and in particular directed towards the area to be protected, whereas outer edge 23a, 24a means the edge closest to and in particular directed towards the working element 200.

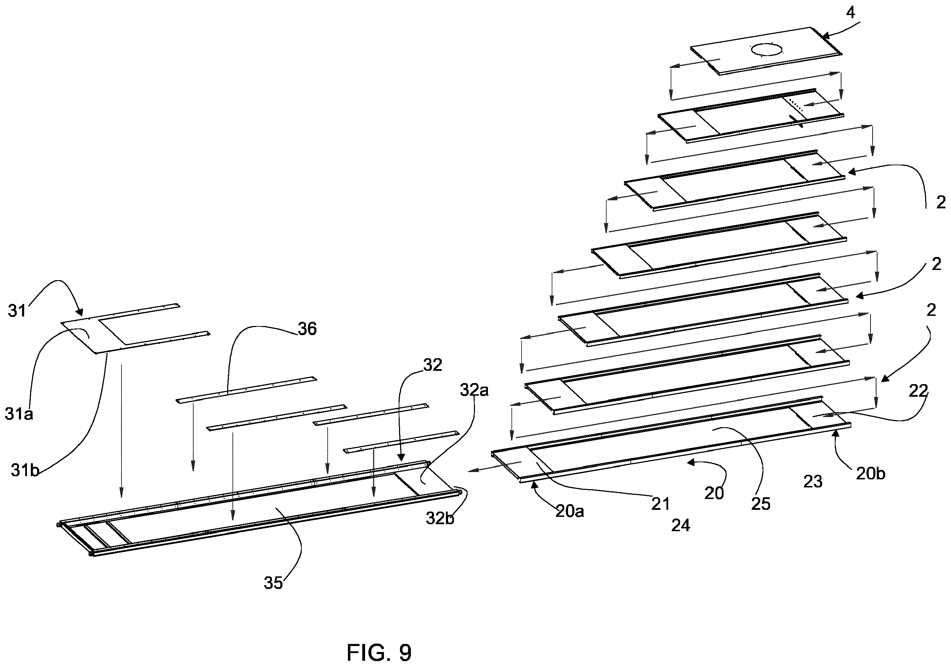

Thanks to this arrangement of the panels 21, 22 it is obtained, as visible in Figure 9, that for example the longer movable covering element 2 is conformed such that its first covering panel 21 is the one in the outermost position of all the panels of all the first covering panels 21 of the covering wall 10, whereas its corresponding second covering panel 22 is the one in the innermost position of all the second covering panels 22 of the covering wall 10. The same applies to all the other movable covering elements 2 that make up device 100.

A characteristic of the invention provides in particular that the profile 23, 24 of the longer frame 20 has a section with a height greater than the sum of the thicknesses of all the first and second panels 21, 22 making up the covering wall 10. In addition to the thickness, a certain gap between one panel 21, 22 and the other can also be taken into account to allow the sliding with play, for example without creeping.

Furthermore, a gasket or scraper may be inserted between a panel 21, 22 and the other to prevent any accidental entry of machining waste.

In such a case, preferably the section of the profiles 23, 24 of the longer frame 20 will have a height greater than the sum of the thicknesses of all the first and second panels 21, 22, including the gap therebetween and/or the footprint of any gaskets or scrapers.

As shown in the figures, a preferred embodiment provides for the two profiles 23, 24 to have a U-shaped section.

In particular, they are arranged such that the opened portion of the U-shaped section of the profile 23 is in front of the U-shaped section of the opposite profile 24, namely said U-shaped sections directed towards the inside of the movable frame 20.

The inside of the frame 20 is understood in the sense of the width of said frame 20, namely in the sliding plane and in the direction orthogonal to the translation direction X.

Said U-shaped section is particularly advantageous, as it allows a guided sliding on at least two sides, of each profile 23, 24, on the longer one immediately adjacent.

Thanks to said U-shaped section, no additional guide elements are required to enable the correct translation in the direction X of all the movable covering elements 2.

In addition, the U-shaped section prevents the entry of waste material at said profiles 23, 24 of the frame 20.

Thanks to the fact said profiles 23, 24 do not end with a straight edge, as could be the case with an L-section, but end with a fold, namely with one of the two wings of the U-shaped section, the entry of waste material is also prevented at the opening 25.

A preferred embodiment in which the first panel 21 joins the two profiles 23, 24 at the outer wings 23a, 24a of the U-shaped section directed towards the outer surface 10a is shown in the figures.

In contrast, the second panel 22 joins the two profiles 23, 24 at the inner wings 23b, 24b of the U-shaped section directed towards the inner surface 10b.

This conformation of the movable covering element 2 makes the solution simple to manufacture and able to allow overlapping the panels 21, 22 in the same direction.

To further ensure the aforesaid advantages, the first panel 21 is preferably positioned as an extension of the outer wings 23a, 24a of the U-shaped section of the opposite profiles 23, 24, while the second panel 22 is positioned as an extension of the inner wings 23b, 24b of the U-shaped section of the opposite profiles 23, 24.

In particular, for the sake of construction simplicity, said first and second panel 21, 22 may be butt welded as a continuation to said outer/inner wings 23a, 24a, 23b, 24b.

Also shown in the figures is a preferred solution in which the first panel 21 is placed at a first end 20a of the frame 20, while the second panel 22 is placed at a second end 20b of the frame 20.

In this way, the first panel 21 and the second panel 22 on each define therebetween the opening 25 through which the working element 200 protrudes outwardly.

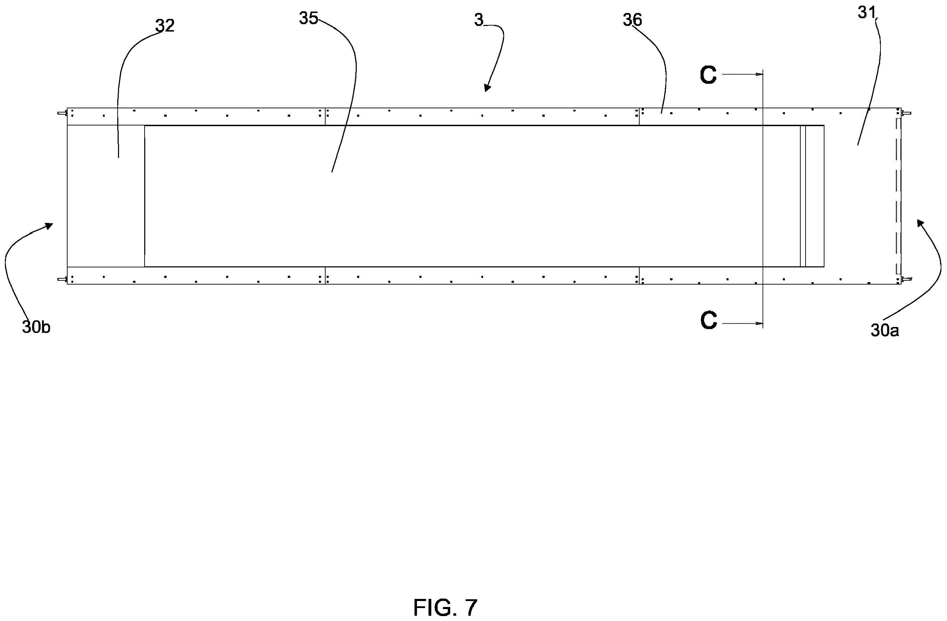

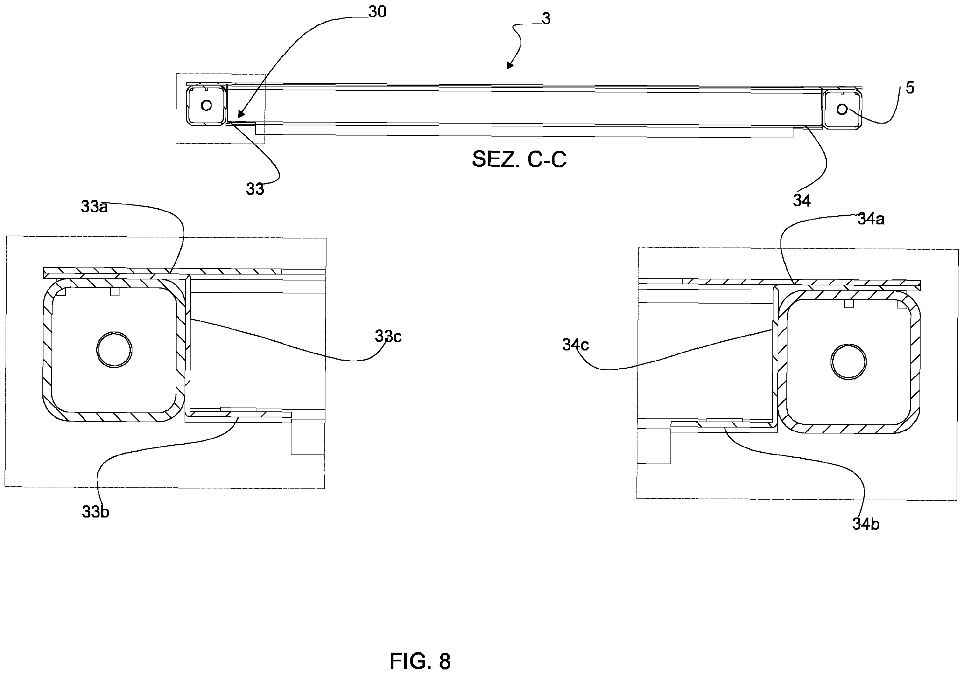

With regard to the first covering element 3 an embodiment is shown in Figures 7 and 8.

In particular, the first frame 30 comprises a pair of first opposite profiles 33, 34, configured to define a guide on which the longer movable covering element 2 slides.

Said pair of first profiles 33, 34 are preferably Z-shaped in which a fixing wing 33a, 34a is mechanically connected to the machinery or apparatus to be protected, whereas an opposite support wing 33b, 34b, preferably directed towards the inside of the frame 30, is adapted to support the movable covering elements 2.

The longer movable covering element 2 slides on said opposite support wing 33b, 34b.

The joining element 33c, 34c, of the Z-section connecting the fixing wing 33a, 34a to the opposite support wing 33b, 34b, acts as a guide on the sliding plane in the direction orthogonal to the translation direction X, for the longer movable covering element 2.

Advantageously, the first end panels 31 are placed close to the fixing wing 33a, 34a, while the second end panels 32 are arranged close to the opposite support wing 33b, 34b.

In order to better ensure that the movable covering element 2 maintains the correct position while translating on the first covering element 3, the first frame 30 preferably comprises a removable cover 36 which is opposite to the support wing 33b, 34b, adapted to hold the movable covering elements 2 in place by preferably holding them in a direction orthogonal to the sliding plane.

Said cover 36, as shown in the figures, may be made in several pieces whose total length covers the entire path along the direction X of the longer movable covering element 2.

Said cover 36 is preferably a plate extending along the profiles 33 and 34 of the frame 30.

As is visible in Figure 9, the first end panel 31 can be made as one piece with the cover 36 and installed at the fixing wing 33a, 34a.

As regards the shorter movable covering element 2, this can be mechanically connected to the working element 200 and be dragged along the direction of traverse X directly by it.

Alternatively, as shown in the figures, the device 100 may comprise a last covering element 4 placed at the working element 200 and integral with it, which the shorter movable covering element 2 is fixed to.

This last covering element 4 may be a casing surrounding the working element 200 and connecting it to the shorter movable covering element 2.

Said covering element 4 is preferably a panel, conformed as a planar element, and any difference in height between the first panel 21 and the second panel 22 of the shorter movable covering element 2, to which it is mechanically connected, is preferably compensated for by making said second panel 22 with a greater thickness, for example by being made as an element similar to a "box".

In summary, the translation of the working element 200 drags the shorter movable covering element 2 with it.

This shorter movable covering element 2 in turn slides within the profiles 23, 24 of the frame 20 of the adjacent movable covering element 2.

In order to drag with it the movable covering element 2 adjacent thereto each movable covering element 2 is conformed such that each first panel 21 comprises a first engagement element 26.

Alternatively or simultaneously, the second panel 22, may also comprise a second engagement element 27.

Said first and second engagement elements 26, 27 extend from the inner surface 10b, towards the area to be protected.

In particular, they are conformed to contact, while translating along the translation direction X, the corresponding first and/or second engagement elements 26, 27 of the adjacent movable covering elements 2, for dragging them to a stop position wherein all the first engagement elements 26 or the second engagement elements 27 are all in contact with each other.

In particular, during the vertical movement of the working element 200, the latter drags the shorter movable covering element 2 with it; this slides within the adjacent mobile covering element 2, and when the engagement element 26 of its panel 21 of the shorter movable covering element 2 contacts the engagement element 26 of the movable covering element 2 adjacent thereto, it drags it with it by sliding it within the next movable covering element 2, until its engagement element 26 contacts the engagement element 26 of said next movable covering element 2, and so on.

Therefore, when the working element 200, which moves in the vertical translation direction X, has reached the end of its stroke in the topmost position, all the first panels 21 will be in maximum overlapping with each other and all the engagement elements 26 will be in contact with each other.

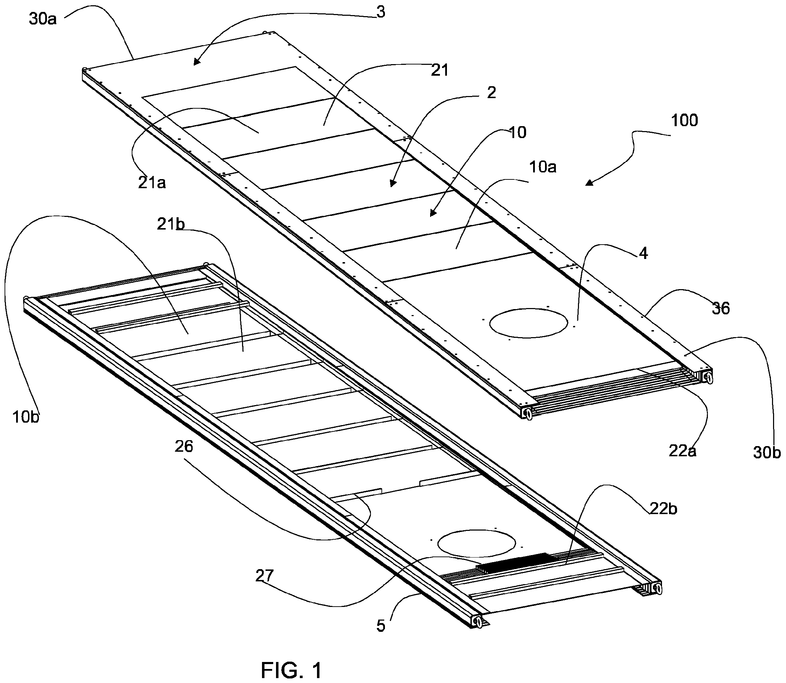

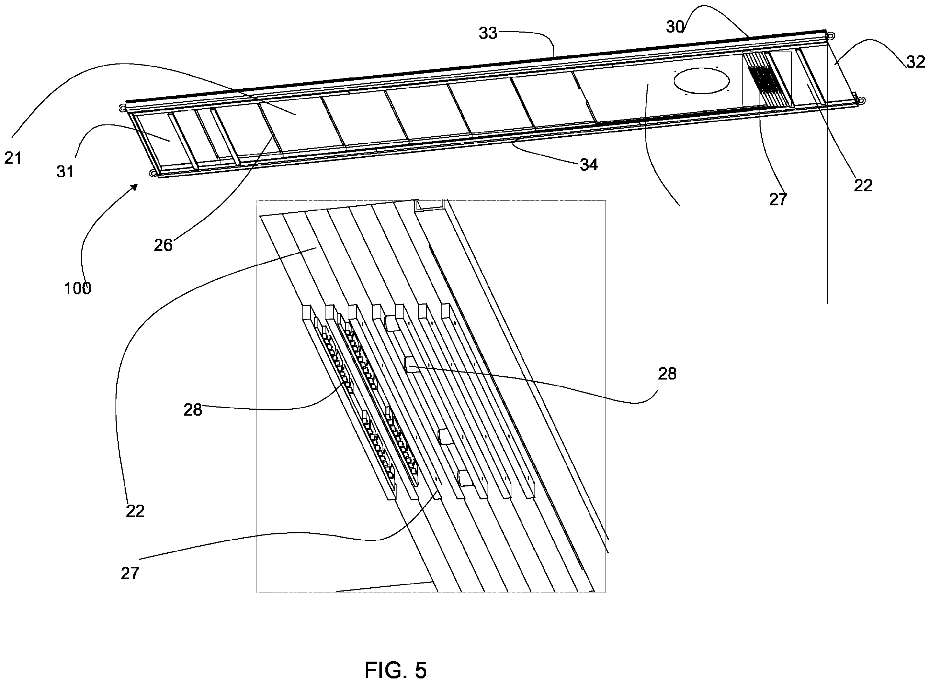

As depicted in Figures 1 and 5, preferably the first engagement element 26 of each first panel 21 is a monolithic extension of said first panel 21, and preferably the second engagement element 27 of each second panel 22 is a removable extension of said second panel 22 or vice versa.

The fact that the first engagement element 26 is a monolithic extension of said first panel 21 simplifies the installation of the device 100 as it does not require the assembly of the first engagement elements 26. For example, said first engagement elements 26 may be realised, like in Figures 1 and 5, in a simple way which provides for the realisation of a 90° fold of the first panel 21.

If the first engagement element 26 is a monolithic extension of said first panel 21, preferably the second engagement element 27 of each second panel 22 is a removable extension of said second panel 22.

Thanks to this solution it is possible to fit all the movable covering elements 2 one inside the other and only after they have all been fitted the assembly of the second engagement elements 27 of each second panel 22 can be carried out.

This also prevents the movable covering elements 2 from slipping out along the translation direction X once they are fitted in place.

As depicted in the figures said second engagement element 27 made as a removable extension of said second panel 22 may be plates screwed perpendicularly to said second panel 22.

The installation of the device 100 is completed, as depicted in the Figure, by mounting all the movable covering elements 2, already fitted the one inside the other, on the first covering element 3 which is then fixed to the machine or apparatus in the area to be protected, such that the working element 200 passes through the openings 35, 25. Finally, one or more covers 36 are mounted.

In order to reduce the impacts and the noise during operation of the device 100, in particular due to the contact between all the first engagement elements 26 and/or all the second engagement elements 27, it may advantageously be provided that said first engagement element 26 and/or second engagement element 27 comprise a dampening element 28 configured to absorb the contact with the respective engagement elements 26, 27 of the adjacent movable covering elements 2.

Said dampening element 28 may for example be one or more buffers, or one or more spring or hydraulic dampers, or in general any element capable of absorbing part of the energy due to the impact. Different types of damping elements 28 are shown in Figure 5.

It is understood however that what is described above has a value of non-limiting example, therefore, possible variants of detail that may be necessary for technical and/or functional reasons, are considered from now falling within the same protective scope defined by the claims indicated below.

## Claims

1. A protective covering device (100) for machinery or apparatuses where a working element (200) is movable along a translation direction (X); the device (100) comprising a covering wall (10) wherein a first portion (11) and a corresponding second portion (12) of said covering wall (10) are separated from each other by the working element (200), said first portion (11) comprising a plurality of first covering panels (21) and said second portion (12) comprising a plurality of second covering panels (22) said first and second panels (21, 22) being mechanically connected to each other by means of a frame (20) which defines a movable covering element (2) wherein each movable covering element (2) elongates according to the translation direction (X) increasing in length with respect to each other, from the smallest to the largest, said movable covering elements (2) being configured to translate along the translation direction (X) the one with respect to the other such that the first panel (21) of each movable covering element (2) slidably overlaps partially the first panel (21) of the adjacent shorter movable covering element (2), and the second panel (22) of each movable covering element (2) slidably overlaps partially the second panel (22) of the longer movable covering element (2) adjacent thereto, the covering device (100) being **characterised in that** each frame (20) comprises a pair of profiles (23, 24) that are opposite and having a decreasing size section such that the section of the profile (23, 24) of each movable covering element (2) can be slidably fitted into the corresponding profile section (23, 24) of the adjacent longer movable covering element (2) and the latter is configured to slidably receive the corresponding profile section (23, 24) of the adjacent shorter movable covering element (2), and wherein all first panels (21) are arranged close to the outer edge (23a, 24a) of the respective profile (23, 24), while the second panels (22) are arranged close to the inner edge (23b, 24b) of the respective profile (23, 24).

2. The device (100) according to claim 1, **characterised in that** said movable covering elements (2) are configured to translate along the translation direction (X) the one with respect to the other such that the rear face (21b) of the first panel (21) of each movable covering element (2) slidably overlaps partially the front face (21a) of the first panel (21) of the adjacent shorter movable covering element (2), and the rear face (22b) of the second panel (22) of each movable covering element (2) slidably overlaps partially the front face (22a) of the second panel (22) of the longer movable covering element (2) adjacent thereto.

3. The device (100) according to any one of the preceding claims, **characterised in that** the frame (20) is arranged along the translation direction (X), such as to have a first end (20a) on a side of the working element (200), and a second opposite end (20b) on the opposite side, and said first panel (21) and second panel (22) in connection with the respective frame (20) define therebetween an opening (25) through which the working element (200) protrudes outwardly.

4. The device (100) according to any one of the preceding claims, **characterised in that** the first panel (21) is placed at the first end (20a) of the frame (20) and the second panel (22) is placed at the second end (20b) of the frame (20).

5. The device (100) according to any one of the preceding claims, **characterised in that** the profile (23, 24) of the longer frame (20) has a section with a height greater than the sum of the thicknesses of all the first and second panels (21, 22) that make up the covering wall (10).

6. The device (100) according to any one of the preceding claims, **characterised in that** the two profiles (23, 24) have a U-shaped section and are arranged such that the opened portion of the U-shaped section of the profile (23) is in front of that of the opposite profile (24), namely said U-shaped sections directed towards the inside of the movable frame (20).

7. The device (100) according to claim 6, **characterised in that** the first panel (21) joins the two profiles (23, 24) at the outer wings (23a, 24a) of the U-shaped section directed towards an outer surface (10a) of the covering wall (10), and wherein the second panel (22) joins the two profiles (23, 24) at the inner wings (23b, 24b) of the U-shaped section directed towards an inner surface (10b) of the covering wall (10).

8. The device (100) according to any one of claims 6 to 7, **characterised in that** the first panel (21) is positioned as an extension of the outer wings (23a, 24a) of the U-shaped section of the opposite profiles (23, 24) and the second panel (22) is positioned as an extension of the inner wings (23b, 24b) of the U-shaped section of the opposite profiles (23, 24), said first and second panel (21, 22) preferably welded to said outer/inner wings (23a, 24a, 23b, 24b).

9. The device (100) according to any one of the preceding claims, **characterised in that** it comprises one first covering element (3) that can be fixed to the machine or apparatus in the area to be protected in relation to which the movable covering elements (2) translate along the translation direction (X).

10. The device (100) according to any one of the preceding claims, **characterised in that** the frames (20) have a length decreasing from the movable covering element (2) adjacent to the first covering element (3).

11. The device (100) according to any one of the preceding claims, **characterised in that** it comprises a last covering element (4) placed at the working element (200) and integral with it which the shorter movable covering element (2) is fixed to.

12. The device (100) according to any one of the preceding claims, **characterised in that** each first panel (21) comprises a first engagement element (26) and/or second panel (22), comprises a second engagement element (27) that extends from the inner surface (10b), towards the area to be protected, adapted to contact, while translating along the translation direction (X), the corresponding first and/or second engagement elements (26, 27) of the adjacent movable covering elements (2), for dragging them to a stop position wherein all the first engagement elements (26) or the second engagement elements (27) are all in contact with each other.

13. The device (100) according to claim 12, **characterised in that** the first engagement element (26) of each first panel (21) is a monolithic extension of said first panel (21), and preferably the second engagement element (27) of each second panel (22) is a removable extension of said second panel (22) or vice versa.

14. The device (100) according to any one of claims 12 to 13, **characterised in that** the first engagement element (26) and/or the second engagement element (27) comprises a dampening element (28) configured to absorb energy while contacting the respective engagement elements (26, 27) of the adjacent movable covering elements (2).

15. The device (100) according to claim 9, **characterised in that** the first covering element (3) that can be fixed to the machine or apparatus in the area to be protected comprises a first frame (30), a first end panel (31) and a second end panel (32); the rear face (31b) of the first end panel (31) overlaps partially the front face (21a) of the first panel (21) of the adjacent longer frame (20), and the rear face (22b) of the second panel (22) of the longer frame (20) slidably overlaps partially the adjacent front face (32a) of the second end panel (32).

## Patentansprüche

1. Schutzabdeckungsvorrichtung (100) für Maschinen oder Geräte, bei der ein Bedienelement (200) entlang einer Translationsrichtung (X) beweglich ist; wobei die Vorrichtung (100) eine Abdeckwand (10) umfasst, in der ein erster Teil (11) und ein entsprechender zweiter Teil (12) der Abdeckwand (10) durch das Bedienelement (200) voneinander getrennt sind, wobei der erste Teil (11) mehrere erste Abdeckpaneele (21) umfasst und der zweite Teil (12) mehrere zweite Abdeckpaneele (22) umfasst, wobei die ersten und zweiten Paneele (21, 22) mittels eines Rahmens (20), der ein bewegliches Abdeckelement (2) definiert, mechanisch miteinander verbunden sind, wobei jedes bewegliche Abdeckelement (2) sich entsprechend der Translationsrichtung (X) mit einer zunehmenden Länge, vom Kleinsten zum Größten, erstreckt, wobei die beweglichen Abdeckelemente (2) so konfiguriert sind, dass sie sich entlang der Translationsrichtung (X) relativ zueinander bewegen, so dass das erste Paneel (21) jedes beweglichen Abdeckelements (2) das erste Paneel (21) des benachbarten kürzeren beweglichen Abdeckelements (2) gleitend teilweise überlappt, und das zweite Paneel (22) jedes beweglichen Abdeckelements (2) das zweite Paneel (22) des daran angrenzenden längsten beweglichen Abdeckelements (2) gleitend überlappt, wobei das Abdeckelement (100) **dadurch gekennzeichnet ist, dass** jeder Rahmen (20) ein Paar gegenüberliegender Profile (23, 24) umfasst, die einen Teil mit abnehmender Größe aufweisen, so dass der Profilteil (23, 24) jedes beweglichen Abdeckelements im entsprechenden Profilteil (23, 24) des benachbarten längsten beweglichen Abdeckelements (2) verschiebbar gelagert ist, und wobei letzteres so konfiguriert ist, dass es den entsprechenden Profilteil (23, 24) des angrenzenden kürzeren mobilen Abdeckelements (2) gleitend aufnimmt, und wobei alle erste Paneele (21) nahe der Außenkante (23a, 24a) des jeweiligen Profils (23, 24) angeordnet sind, während die zweiten Paneele (22) nahe der Innenkante (23b, 24b) des jeweiligen Profils (23, 24) angeordnet sind.

2. Vorrichtung (100) nach Anspruch 1, **dadurch gekennzeichnet, dass** die beweglichen Abdeckelemente (2) so konfiguriert sind, dass sie sich entlang der Translationsrichtung (X) relativ zueinander bewegen, wobei die hintere Oberfläche (22b) des ersten Paneels (21) jedes beweglichen Abdeckelements (2) die Vorderseite (21a) des ersten Paneels (21) des kürzeren benachbarten beweglichen Abdeckelements (2) gleitend teilweise überlappt, und die hintere Oberfläche (22b) des zweiten Paneels (22) jedes beweglichen Abdeckelements (2) die vordere Oberfläche (22a) des zweiten Paneels (22) des daran angrenzenden längeren beweglichen Abdeckelements, gleitend teilweise überlappt.

3. Vorrichtung (100) nach einem der vorhergehenden Ansprüche, **dadurch gekennzeichnet, dass** der Rahmen (20) entlang der Translationsrichtung (X) so angeordnet ist, dass er auf einer Seite des Bedienelements (200) ein erstes Ende (20a) und auf der gegenüberliegenden Seite ein zweites gegenüberliegendes Ende (20b) aufweist, wobei das erste Paneel (21) und zweite Paneel (22) mit dem jeweiligen Rahmen (20) verbunden sind, um zwischen ihnen eine Öffnung (25) zu definieren, durch die das Bedienelement (200) nach außen ragt.

4. Vorrichtung (100) nach einem der vorhergehenden Ansprüche, **dadurch gekennzeichnet, dass** das erste Paneel (21) auf das erste Ende (20a) des Rahmens (20), und das zweite Paneel (22) auf das zweite Ende (20b) des Rahmens (20) aufgesetzt wird.

5. Vorrichtung (100) nach einem der vorhergehenden Ansprüche, **dadurch gekennzeichnet, dass** das Profil (23, 24) des längeren Rahmens (20) einen Teil mit einer Höhe aufweist, die größer ist als die Summe der Dicken aller ersten und zweiten Paneele (21, 22), die die Abdeckwand (100) bilden.

6. Vorrichtung (100) nach einem der vorhergehenden Ansprüche, **dadurch gekennzeichnet, dass** die beiden Profile (23, 24) einen U-förmigen Abschnitt aufweisen und so angeordnet sind, dass der offene Teil des U-förmigen Abschnitts des Profils (23) vor dem des gegenüberliegenden Profils (24) angeordnet ist, und zwar vor den U-förmigen Abschnitten, die zur Innenseite des mobilen Rahmens (20) weisen.

7. Vorrichtung (100) nach Anspruch 6, **dadurch gekennzeichnet, dass** das erste Paneel (21) die beiden Profile an den Außenflügeln (23a, 24a) des U-förmigen Abschnitts verbindet, die einer äußeren Oberfläche (10a) der Abdeckwand (10) zugewandt sind, und dass das zweite Paneel (22) die beiden Profile (249 bei den Innenflügeln (23b, 24b) des U-förmigen Abschnitts verbindet, die jeweils zur inneren Oberfläche (10b) der Abdeckwand (10) zugewandt sind.

8. Vorrichtung (100) nach einem der Ansprüche 6 bis 7, **dadurch gekennzeichnet, dass** das erste Paneel (21) als eine Verlängerung der Außenflügel (23a, 24a) des U-förmigen Abschnitts der gegenüberliegenden Profile (23, 24) und das zweite Paneel (22) als eine Verlängerung der Innenflügel (23b, 24b) des U-förmigen Abschnitts der gegenüberliegenden Profile (23, 24) positioniert ist, wobei die ersten und zweiten Paneele (21, 22) vorzugsweise an die Außen-/Innenflügel (23a, 24a, 23b, 24b) geschweißt sind.

9. Vorrichtung (100) nach einem der vorhergehenden Ansprüche, **dadurch gekennzeichnet, dass** sie ein erstes Abdeckelement (3) umfasst, das an der Maschine oder Gerät im zu schützenden Bereich fixierbar ist, gegenüber dem sich die beweglichen Abdeckelemente (2) entlang der Translationsrichtung (X) bewegen.

10. Vorrichtung (100) nach einem der vorhergehenden Ansprüche, **dadurch gekennzeichnet, dass** die Rahmen (20) eine vom beweglichen Abdeckelement (2) benachbart zum ersten Abdeckelement (3) abnehmende Länge aufweisen.

11. Vorrichtung (100) nach einem der vorhergehenden Ansprüche, **dadurch gekennzeichnet, dass** sie ein letztes Abdeckelement (4) umfasst, das entsprechend dem Bedienelement (200) angeordnet und mit diesem fest verbunden ist, an dem das kürzere bewegliche Abdeckelement (2) befestigt ist.

12. Vorrichtung (100) nach einem der vorhergehenden Ansprüche, **dadurch gekennzeichnet, dass** jedes erste Paneel (21) ein erstes Kopplungselement (26) umfasst und/oder jedes zweite Paneel (22) ein zweites Kopplungselement (27) umfasst, das sich von der Innenfläche (10b) in Richtung des zu schützenden Bereichs erstreckt und angepasst ist, während der Bewegung entlang der Translationsrichtung (X), die entsprechenden ersten und/oder zweiten Kopplungselemente (26, 27) der benachbarten beweglichen Abdeckelemente (2) zu berühren, um sie in eine Stoppposition zu bewegen, in der sich alle ersten Kopplungselemente (27) oder zweiten Kopplungselemente sich in Kontakt miteinander befinden.

13. Vorrichtung (100) nach Anspruch 12, **dadurch gekennzeichnet, dass** das erste Kopplungselement (26) jedes ersten Paneels (21) eine monolithische Erweiterung des ersten Paneels (21) ist und dass vorzugsweise das zweite Kopplungselement (27) jedes zweiten Paneels (22) eine abnehmbare Erweiterung des zweites Paneels (22) ist, oder umgekehrt.

14. Vorrichtung (100) nach einem der Ansprüche 12 bis 13, **dadurch gekennzeichnet, dass** das erste Kopplungselement (26) und/oder das zweite Kopplungselement (27) ein Stoßdämpferelement (28( enthalten, das so konfiguriert hat, um Energie in Kontakt mit den jeweiligen Kopplungselementen (26, 27) der angrenzenden beweglichen Abdeckelemente zu absorbieren.

15. Vorrichtung (100) nach Anspruch 9, **dadurch gekennzeichnet, dass** das erste Abdeckelement (3), das an der Maschine oder Gerät in dem zu geschützten Bereich befestigt werden kann, einen ersten Rahmen (30), ein erstes Endpaneel (31) und ein zweites Endpaneel (329 umfasst; wobei die hintere Oberfläche (31b) des ersten Endpaneels (31) die vordere Oberfläche (21a) des ersten Paneels (21) des benachbarten längeren Rahmens teilweise überlappt, und wobei die hintere Oberfläche (22b) des zweiten Paneels (22) des längeren Rahmens (20) die angrenzende vordere Oberfläche (32a) des zweiten Endpaneels (32) teilweise gleitend überlappt.

## Revendications

1. Dispositif de revêtement de protection (100) pour machine ou équipement, dans lequel un élément de commande (200) est mobile selon une direction de translation (X); le dispositif (100) comprenant une paroi de revêtement (10) dans laquelle une première partie (11) et une deuxième partie correspondante (12) de ladite paroi de revêtement (10) sont séparées l'une de l'autre par l'élément de commande (200), dans lequel la première partie (11) comprend une pluralité de premiers panneaux de revêtement (21) et ladite deuxième partie (12) comprend une pluralité de deuxièmes panneaux de revêtement (22), lesdits premier et deuxième panneaux (21, 22) étant reliés mécaniquement l'un à l'autre au moyen d'un cadre (20) qui définit un élément de revêtement mobile, dans lequel chaque élément de revêtement mobile (2) se développe selon le sens de translation (X) avec une longueur croissante réciproque, de la plus petite à la plus grande, lesdits éléments de revêtement mobiles étant configurés pour se déplacer le long de la direction de translation (X) l'un par rapport à l'autre, de telle sorte que le premier panneau (21) de chaque élément de revêtement mobile (2) chevauche partiellement de manière coulissante le premier panneau (21) de l'élément de revêtement mobile (2) le plus court adjacent, et le deuxième panneau (22) de chaque élément de revêtement mobile (2) chevauche partiellement de manière coulissante le deuxième panneau (22) de l'élément de revêtement mobile (2) le plus long qui lui est adjacent, le dispositif de revêtement (100) étant **caractérisé en ce que** chaque cadre (20) comprend une paire de profilés qui sont opposés et ont une partie de taille décroissante, de telle sorte que la partie profilée (23, 24) de chaque élément de recouvrement mobile (2) peut être montée de manière coulissante dans la partie profilée correspondante (23, 24) de l'élément de recouvrement mobile (2) adjacent le plus long, et cette dernière est configurée de manière à recevoir de manière coulissante la partie profilée correspondante (23, 24) de l'élément de revêtement mobile (2) adjacent le plus court, et dans lequel tous les premiers panneaux (21) sont disposés à proximité du bord externe (23a, 24a) du profilé respectif (23, 24), tandis que les deuxièmes panneaux (22) sont disposés à proximité du bord interne (23b, 24b) du profilé respectif.

2. Dispositif (100) selon la revendication 1, **caractérisé en ce que** lesdits éléments de revêtement mobiles (2) sont configurés pour se déplacer selon la direction de translation (X) les uns par rapport aux autres, de telle manière que la face arrière (21b) du premier panneau (21) de chaque élément de revêtement mobile (2) chevauche partiellement de manière coulissante la face avant (21a) du premier panneau (21) de l'élément de revêtement mobile (2) adjacent le plus court, et la face arrière (22b) du deuxième panneau (22) de chaque élément de revêtement mobile (2) chevauche partiellement de manière coulissante la face avant (22a) du deuxième panneau (22) de l'élément de revêtement mobile (2) le plus long adjacent à celui-ci.

3. Dispositif selon l'une des revendications précédentes, **caractérisé en ce que** le cadre (20) est disposé selon le sens de translation (X), de manière à présenter une première extrémité (20a) d'un côté de l'élément de commande (200), et une deuxième extrémité opposée (20b) du côté opposé, et lesdits premier (21) et deuxième (22) panneaux sont reliés au cadre (20) respectif de manière à définir entre eux une ouverture (25) à travers laquelle l'élément de commande (200) fait saillie vers l'extérieur.

4. Dispositif selon l'une des revendications précédentes, **caractérisé en ce que** le premier panneau (21) est placé sur la première extrémité (20a) du cadre (20) et le deuxième panneau (22) est placé sur la deuxième extrémité (20b) du cadre (20) .

5. Dispositif selon l'une des revendications précédentes, **caractérisé en ce que** le profilé du cadre (20) le plus long présente une partie de hauteur supérieure à la somme des épaisseurs de tous les premier et deuxième panneaux (21, 22) qui forment la paroi de revêtement (10).

6. Dispositif selon l'une des revendications précédentes, **caractérisé en ce que** les deux profilés (23, 24) ont une section en U et sont disposés de telle sorte que la partie ouverte de la section en U du profilé (23) soit disposée à l'opposé de celle du profilé opposé (24), et précisément desdites sections en U tournées vers l'intérieur du cadre mobile (20).

7. Dispositif selon la revendication 6, **caractérisé en ce que** le premier panneau (21) réunit les deux profilés (23, 24) en correspondance des ailes externes (23a, 24a) de la section en U tournée vers une surface externe (10a) de la paroi de revêtement (10), et dans lequel le deuxième panneau (22) réunit les deux profilés (23, 24) en correspondance des ailes internes (23b, 24b) de la section en U tournée vers une surface interne (10b) de la paroi de revêtement (10).

8. Dispositif (100) selon l'une des revendications 6 à 7, **caractérisé en ce que** le premier panneau (21) est positionné comme un prolongement des ailes externes (23a, 24a) de la section en U des profilés opposés (23, 24) et le deuxième panneau (22) est positionné comme un prolongement des ailes internes (23b, 24b) de la section en U des profilés opposés (23, 24), lesdits premier et deuxième panneaux (21, 22) étant de préférence soudés auxdites ailes externe/interne (23a, 24a, 23b, 24b).

9. Dispositif (100) selon l'une des revendications précédentes, **caractérisé en ce qu'**il comprend un premier élément de revêtement (3) qui peut être fixé à la machine ou à l'équipement dans la zone à protéger, par rapport auquel les éléments de revêtement mobiles (2) se déplacent selon le sens de translation (X).

10. Dispositif (100) selon l'une des revendications précédentes, **caractérisé en ce que** les cadres (20) ont une longueur décroissante à partir de l'élément de revêtement mobile (2) adjacent au premier élément de revêtement (3).

11. Dispositif (100) selon l'une des revendications précédentes, **caractérisé en ce qu'**il comprend un dernier élément de revêtement (4) situé en correspondance de l'élément de commande (100) et solidaire de celui-ci, auquel est fixé l'élément de revêtement mobile (2) le plus court.

12. Dispositif (100) selon l'une des revendications précédentes, **caractérisé en ce que** chaque premier panneau (21) comprend un premier élément de couplage (25) et/ou chaque deuxième panneau (22) comprend un deuxième élément de couplage (27) qui s'étend depuis la surface interne (100), vers la zone à protéger, adapté à contacter, en se déplaçant selon la direction de translation (X), les premier et/ou deuxième éléments d'accouplement (26, 27) correspondants des éléments de revêtement mobiles (2) adjacents, afin de les déplacer vers une position d'arrêt dans laquelle tous les premiers éléments de couplage (26) ou les deuxièmes éléments de couplage (27) sont en contact les uns avec les autres.

13. Dispositif (100) selon la revendication 12, **caractérisé en ce que** le premier élément de couplage (26) de chaque premier panneau (21) est une extension monolithique dudit premier panneau (21), et que de préférence le deuxième élément de couplage (27) de chaque deuxième panneau (22) est une extension amovible dudit deuxième panneau (22) ou vice versa.

14. Dispositif (100) selon l'une des revendications de 12 à 13, **caractérisée en ce que** le premier élément de couplage (26) et/ou le deuxième élément de couplage (27) comprennent un élément d'absorbeur (28), configuré pour absorber énergie en contact avec les éléments de couplage respectifs (26, 27) des éléments de revêtement mobiles adjacents (2).

15. Dispositif (100) selon la revendication 9, **caractérisé en ce que** le premier élément de revêtement (3) qui peut être fixé à la machine ou à l'équipement dans la zone à protéger comprend un premier cadre (30), un premier panneau d'extrémité (31) et un deuxième panneau d'extrémité (22) ; la face arrière (31b) du premier panneau d'extrémité (31) chevauchant partiellement la face avant (21a) du premier panneau (21) du cadre adjacent plus long (20), et la face arrière (22b) du deuxième panneau (22) du cadre plus long (20) se chevauche partiellement de manière coulissante sur la face avant adjacente (32a) du deuxième panneau d'extrémité (32).
